# EUROPEAN PATENT SPECIFICATION

(11) **EP 2 040 433 B1**
(45) Date of publication and mention of the grant of the patent: **10.08.2011**
(21) Application number: 07018499.9
(22) Date of filing: 20.09.2007
(51) Int. Cl.: H04L 29/06, G06F 21/00

(54) **Password update in a communication system**
Passwortaktualisierung in einem Kommunikationssystem
Mise à jour de mot de passe dans un système de communication

(43) Date of publication of application: 25.03.2009
(73) Proprietor: Nokia Siemens Networks Oy, 02610 Espoo (FI)
(72) Inventor: Horn, Günther, Dr., 81541 München (DE); Leis, Peter, 82377 Penzberg (DE); Milinski, Alexander, 81371 München (DE); Shen, Dr. Jiadong, 81379 München (DE); Wiehe, Ulrich, 36251 Bad Hersfeld (DE)
(74) Representative: Schober, Ralf Stefan

(56) References cited:
- EP-A- 0 773 489
- EP-A- 0 929 025
- EP-A- 1 045 566

## Description

### Technical field of the invention:

The invention relates to a method of updating and delivering a password in a communication system and to a system and a register entity for the same.

### Background of the invention:

Within the IP (Internet Protocol) Multimedia Subsystem (IMS) as defined by 3^{rd} Generation Partnership Project (3GPP) Session Initiation Protocol (SIP) defined by Internet Engineering Task Force (IETF) is used for controlling communication. SIP is an application-layer control protocol for creating, modifying, and terminating sessions with one or more participants. These sessions may include Internet multimedia conferences, Internet telephone calls, and multimedia distribution. Members in a session can communicate via multicast or via a mesh of unicast relations, or a combination of these. Diameter protocol has been defined by IETF and is intended to provide an Authentication, Authorization and Accounting (AAA) framework for applications such as network access or IP mobility.

Different types of network entities and functions exist in the IMS network. Call Session Control Functions (CSCF) implement a session control function in SIP layer. The CSCF can act as Proxy CSCF (P-CSCF), Serving CSCF (S-CSCF) or Interrogating CSCF (I-CSCF). The P-CSCF is the first contact point for the User Equipment (UE) within the IMS; the S-CSCF actually handles the session states in the network; the I-CSCF is mainly the contact point within an operator's network for all IMS connections destined to a subscriber of that network operator, or a roaming subscriber currently located within that network operator's service area.

The functions performed by the I-CSCF are, for example, assigning an S-CSCF to a user performing SIP registration and routing SIP requests received from another network towards the S-CSCF. The S-CSCF performs the session control services for the UE. It maintains a session state as needed by the network operator for support of the services and may be acting as Registrar, i.e. it accepts registration requests and makes its information available through the register and location servers (e.g. HSS). The S-CSCF is the central point to users that are hosted by this S-CSCF. The S-CSCF provides services to registered and unregistered users when it is assigned to these users. This assignment is stored in the Home Subscriber Server (HSS).

The HSS is the master database for a given user. It is the entity containing the subscription-related information to support the network entities actually handling calls/sessions. As an example, the HSS provides support to the call control servers (CSCFs) in order to complete the routing/roaming procedures by solving authentication, authorisation, naming/addressing resolution, location dependencies, etc.
The HSS is responsible for holding the following user related information:
- User Identification, Numbering and addressing information
- User Security information: Network access control information for authentication and authorization, such as password information
- User Location information at inter-system level: the HSS supports the user registration, and stores inter-system location information, etc.
- User profile information.
   Hypertext transfer protocol (HTTP) Digest authentication is an HTTP authentication which verifies with a challenge-response mechanism that both parties to the communication know a shared secret, such as a password. HTTP Digest authentication can be done without sending the shared secret in clear. It is used, for example, when IMS services are accessed with terminals that either do not have a SIM card or UMTS IC card (UICC) or cannot use the card in IMS authentication.
   In IMS, SIP Digest has recently been introduced as a new possible authentication mechanism. SIP Digest authentication scheme has been specified in IETF document Request For Comments (RFC) 3261. SIP Digest achieves mutual authentication between the UE and the network, and is based on HTTP Digest as specified in IETF RFC 2617. The identity used for authenticating a subscriber is the private user identity (IMPI) which has the form of a network access identifier (NAI). The HSS and the UE share a preset secret (e.g., a password) associated with the IMPI. Within the IMS, the HSS stores a user name and related credentials like a password permanently, while the S-CSCF is downloading the password from the HSS during the initial registration procedure and uses this password for user authentication during the whole registration period (the time for which the user equipment is registered in the S-CSCF).
   However, one characteristic of SIP Digest authentication mechanism is that the password may be updated during the SIP registration period. A change of the password means that the user specific password in the HSS and in the UE is changed. The password change may be initiated either by the user or UE, or by the network, e.g. the HSS.
   Obtaining and storing an up to date password in every node (e.g. S-CSCF, HSS, and UE) and existence of synchronized password change mechanism between the nodes are vital requirement for successful authentication and network access.
   EP0773489 discloses a foreingn registry receiving automatically password changes for selected users when these passwords are changed in the Distributed Computing Environment registry.
   The object of the invention is to overcome the above problems.

### Summary of the invention

The present invention is defined by the subject matter of the appended claims.

The transmitting happens as part of a user profile update request and/or in a message according to Diameter protocol, for example in a Push-Profile-Request command of Diameter protocol. The password may be transmitted over Cx interface of an internet protocol (IP) multimedia subsystem (IMS). The new password may be obtained from the user or created in the register entity. A delivery of the new password to the user may be initiated at the register entity. A transmittal of a confirmation of the new password to the user may be initiated at the register entity.

The serving entity in the communication system may further comprise storing, for a period of time, both the new password for the user and a previous password for the user, and, removing the previous password after a residual lifetime. The authentication may comprise authenticating the communication primarily using the new password, and secondarily using the previous password if the authentication with the new password is not successful. The removal of the previous password may happen responsive to a successful authentication with the new password. The communication system is an internet protocol (IP) multimedia subsystem (IMS) network and the serving entity (1) is a serving call state control function (S-CSCF).

The present invention has the advantage that the passwords stored in the HSS and the S-CSCF for authentication can be kept consistent as soon as a new password is obtained in the HSS. Also no performance overhead will be caused for the network since the message exchange for implementing the update mechanism is kept in minimum.

### Description of drawings

Figure 1 illustrates relations between UE, HSS and S-CSCF (prior art)
Figure 2 presents a signaling flow and actions of HSS and S-CSCF according to this invention.
Figure 3 presents an internal structure of HSS and S-CSCF implementing the functions of the invention

### Detailed description of the invention

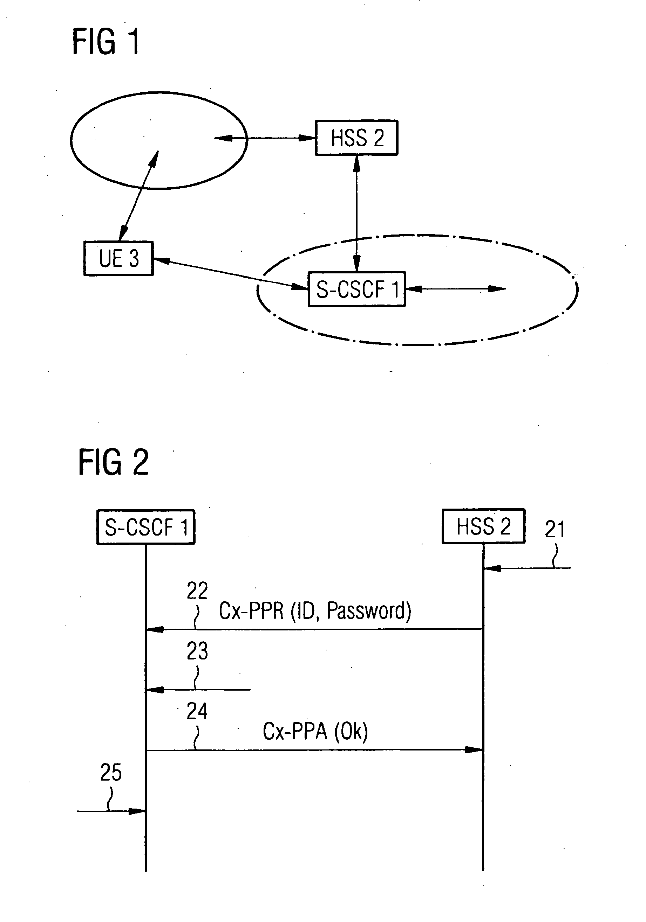

Figure 1 presents a basic architecture and functions of an IMS network as far as relevant for this invention. The parts not important for the invention (e.g. P-CSCF, I-CSCF) have been omitted for the sake of simplicity. UE 3 is a terminal device, e.g. a mobile or fixed line terminal which a user of the IMS core network 5 is using for various communication purposes. Each user is having a unique identity based on which the user may be unambiguously identified in the IMS core network 5. A user may have several end devices (UEs) and may access the network with any of them using the same identity. The S-CSCF 1, located in the IMS core network 5, is providing services for users of the IMS core network 5. For example, the S-CSCF 1 is providing services for the UE 3 if the S-CSCF 1 has been assigned for the UE 3 in the HSS 2 database. The HSS 2 maintains user profiles of the users of IMS core network 5. The HSS 2 further holds other service related information and security parameters. The UE 3 is communicating with the S-CSCF 1 using SIP protocol when accessing IMS services as illustrated with a line between the UE 3 and the S-CSCF 1. The S-CSCF 1 may forward SIP communication received from the UE 3 further, e.g. towards another UE, in the IMS core network 5 as shown with another line extending right from the S-CSCF 1. The S-CSCF 1 is exchanging information with the HSS 2 using Diameter protocol as illustrated by the line between the S-CSCF 1 and the HSS 2. The UE 3 may also communicate with service provider's (non-IMS) applications 4, which applications may include e.g. device management (DM) server for obtaining operator and service related settings for the device (UE), or different kind of web portals. Also the HSS 2 may communicate with the service provider's applications 4, e.g. for transmitting service related parameters and setting to HSS 2 database.

The purpose of authentication is to confirm a claimed identity of a user, or to confirm that a message and its content have not been changed after the message has been sent. Authentication may be done, for example, with passwords or a user name, or by checking that the system is the one to which the user wishes to have a connection, for example a web site. Authentication can also involve the use of a cryptographic system and digital signatures. The party being authenticated may be a user, subscriber, home environment, or serving network.

Diameter is an authentication, authorisation, and accounting (AAA) protocol used for network access services, such as dial-up and mobile IP. The Diameter base protocol is evolved from the remote authentication dialin user service (RADIUS) protocol.

Diameter multimedia client and Diameter multimedia server implement the Diameter multimedia application. The client is one of the communicating Diameter peers that usually initiates transactions. Examples of communication elements that may implement the Diameter multimedia client are the I-CSCF and S-CSCF. An example of a Diameter multimedia server is the HSS.

Push-Profile-Request (PPR) is a Diameter command message that a Diameter multimedia server (e.g. HSS) sends to a Diameter multimedia client (e.g. S-CSCF) to update the subscription data of a multimedia user in the Diameter multimedia client when a modification has occurred in the subscription data the client uses. Push-Profile-Answer (PPA) is a Diameter command message that a client sends in response to a previously received Push-Profile-Request message.

In IMS, the assignment of the S-CSCF will happen when the first SIP request for a user arrives at an S-CSCF. The S-CSCF will try to download the user profile of the user from the HSS using Server-Assignment-Request (SAR). SAR request is a Diameter command message that a Diameter multimedia client sends to a Diameter multimedia server to request the server to store the name of the server (the S-CSCF) that is currently serving the user. The interface between the S-CSCF and the HSS is called Cx interface. If no S-CSCF is previously assigned to this user, the HSS assigns the S-CSCF to this user and provides the user profile to the S-CSCF using Diameter Server-Assignment-Answer (SAA) response over Cx interface.

In this section the S-CSCF assignment process for a user is described in more detail. When a User Equipment (UE) attaches and makes itself available for access to IMS services by explicitly registering in the IMS, an S-CSCF shall be assigned to serve the UE. The selection of an S-CSCF is performed in the I-CSCF. For example, the following information is needed in the selection of the S-CSCF:
- Required capabilities for user services, provided by the HSS.
- Operator preference on a per-user basis, provided by the HSS.
- Capabilities of individual S-CSCFs in the home network. This is internal information within the operator's network and may be used in the S-CSCF selection.
- Topological information of where the S-CSCF is located. This is internal information within the operator's network and may be used in the S-CSCF selection.

Cx interface exist between both the HSS and the I-CSCF, and the HSS and the S-CSCF. In order to support the S-CSCF selection described above and to allow the S-CSCF to perform its tasks, the Cx interface must support transferring following information:
- transfer of CSCF-UE security parameters from HSS to CSCFs. The security parameters allow the CSCFs and the UE to communicate in a trusted and secure way.
- transfer of service parameters of the subscriber from HSS to CSCFs. This may include e.g. service parameters, Application Server (AS) address, triggers, information on subscribed media etc. The information on subscribed media is provided in the form of a profile identifier; details of the allowed media parameters associated with the profile identifier are configured in the S-CSCF.
- transfer of CSCF capability information from HSS to CSCFs. This may include e.g. supported service set, protocol version numbers etc.
- transfer of session signalling transport parameters from CSCFs to HSS. The HSS stores the signalling transport parameters and they are used for routing mobile terminated sessions to the Serving-CSCF. The parameters may include e.g. IP-address and port number of CSCFs, transport protocol etc. The information mentioned above shall be transferred before the CSCF is able to serve the user. It shall also be possible to update this information while the CSCF is serving the user, for example if new services are activated for the user.

According to the invention, a "Push-Mechanism" is used to deliver the updated password from the HSS to the S-CSCF. After the HSS has generated or received a new password for the user, the HSS transmits the new password to a S-CSCF that is currently assigned to the user.

There are various ways how the HSS may obtain a new password. For example a user enters the new password through a web portal, which in turn forwards the new password to the HSS. Alternatively the HSS may create a new password by itself without user interaction. If the HSS creates a new password, the user may be informed of the new password, for example, by over-the-air (OTA) mechanisms to mobile terminal or other user equipment (UE) of the user, or by email, or by other means.

The implementation of the invention may be for example an extension of the existing Cx-PPR/PPA command described above, or a new procedure that provides similar capability. The extension may be implemented as a new attribute-value pair (AVP). AVP is a generic pair of values that consists of an attribute header and the corresponding value. The attribute-value pair is used to encapsulate protocol-specific data such as routing information, as well as authentication, authorisation, or accounting information.

In one aspect of the invention the new password in transmitted to S-CSCF by HSS initiated update of user profile. This procedure is initiated by the HSS to update user profile information and/or charging information and/or SIP Digest authentication information in the S-CSCF. The procedure is mapped to the commands Push-Profile-Request/Answer in the Diameter application. Below table shows an example structure of modified User Profile Update request sent from the HSS to the S-CSCF according to this invention. A new SIP Digest authentication element comprising the new/updated password is shown *in italic font.*

| **Information element name** | **Mapping to Diameter AVP** | **Cat ·** | **Description** |
|---|---|---|---|
| Private User Identity / Private Service Identity | User-Name | M | Private Identity. The HSS shall always send a Private Identity that is known to the S-CSCF based on an earlier SAR/SAA procedure. |
| User profile | User-Data | C | Updated user profile, It shall be present if the user profile is changed in the HSS. If the User-Data AVP is not present, the Charging-Information AVP shall be present. |
| *Authenticati on Data* | *SIP-Auth-Data-Item* | C | *SIP Digest authentication information.* *It shall be present if the used authentication scheme is SIP Digest and when a password change has occured in the HSS* |
| Charging Information | Charging-Information | C | Addresses of the charging functions. It shall be present if the charging addresses are changed in the HSS. If the Charging-Information AVP is not present, the User-Data AVP shall be present. When this parameter is included, either the Primary-Charging-Collection-Function-Name AVP or the Primary-Event-Charging-Function-Name AVP shall be included. All other charging information shall be included if it is available. |
| Routing Information | Destination-Host | M | It contains the name of the S-CSCF which originated the last update of the name of the multimedia server stored in the HSS for a given IMS Subscription. The address of the S-CSCF is the same as the Origin-Host AVP in the message sent from the S-CSCF. |

The HSS may make use of this procedure to update the relevant user information to the S-CSCF. The user information contains the user profile. If there are multiple registered Private User Identities associated to the Public User Identity in the HSS, the HSS may send only single request and select arbitrarily one of the Private User Identities and put it into the request. Additionally the Charging-Information AVP and/or the User-Data AVP may be present in the request. The SIP-Auth-Data-Item AVP is present if the command is sent in order to update SIP Digest authentication information due to a password change. The S-CSCF shall replace existing authentication information with the information received from the HSS.

Figure 2 shows the information flow for password update procedure between the S-CSCF and the HSS. In step 21, a password change for a user happens in the HSS 2, after which in step 22 the HSS 2 initiates the modified Cx PPR command for informing the S-CSCF 1 of the new user password. The modified Cx PPR command 22 includes also a private user identity (ID) of the user. The S-CSCF 1 stores the new password for the user in its memory in step 23 and acknowledges the update in step 24. The S-CSCF 1 uses the new password in authentication of communication from the user in step 25.

In one aspect of the invention the synchronisation of the password change between the user and the network is further improved as described in this section.

When the S-CSCF 1 receives a new password from the HSS 2, the S-CSCF 1 stores the new password together with the old password. The old password is deleted after a residual lifetime that may be set by the HSS 2 or the S-CSCF 1 policy. The residual lifetime is preferably greater than the time estimated for the UE 3 to have the new password ready for use. When the S-CSCF 1 needs to authenticate communication (e.g. SIP message from UE 3) and it has two passwords (old and new) for a user it may first try the new password. If the authentication with the new password is successful the S-CSCF 1 may immediately delete the old password even if the residual lifetime is not yet over. If the authentication with the new password is not successful, the S-CSCF 1 may try the old password.

After the HSS 2 has transmitted the new password to the S-CSCF 1, or after the S-CSCF 1 has acknowledged the successful password transmission, the HSS 2 may send a confirmation to the UE 3 that the new password is now ready for use. The confirmation may be transmitted in various ways, for example, if the user entered the new password through a web portal, the HSS 2 informs the web portal, which sends a confirmation to the UE 3. If the HSS 2 created the password, the UE 3 may be informed about the new password by over-the-air mechanisms or by other mechanism.

When the user or UE 3 receives the confirmation, it may perform local procedures for making the new password ready for use, and, from this point onwards, uses the new password to authenticate message, e.g. SIP REGISTER or SIP INVITE messages. The UE 3 may acknowledge the password update to the HSS 2.

In one aspect of the invention, after obtaining a new password for a user, the HSS 2 keeps also the old password until the synchronization is completed towards the UE 3 and the S-CSCF 1. The old password may be deleted e.g. after a residual lifetime set by HSS 2 policy or after one or both of the UE 3 and S-CSCF 1 have acknowledged the new,password. Meanwhile the old password may be used by the HSS 2 if the user is making a further registration to the network, before the user has acknowledged the new password. In this case the HSS 2 may return the old password to an S-CSCF (which may be different than the S-CSCF 1) that is requesting a user profile of the user.

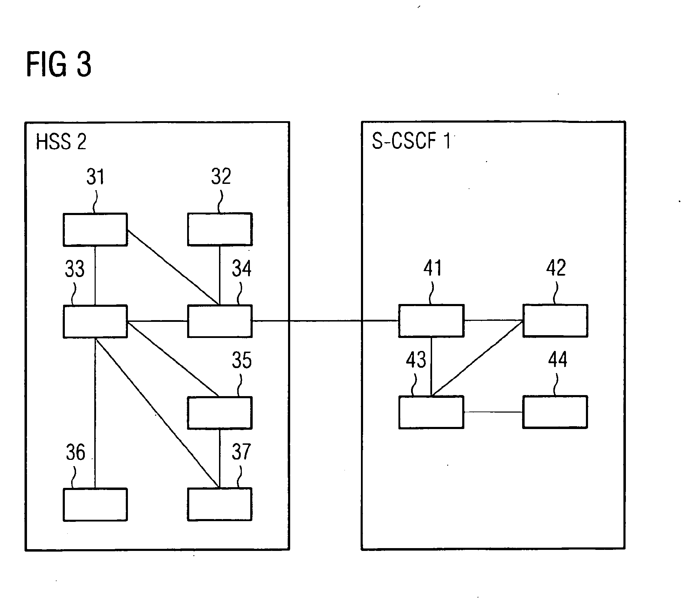

Figure 3 illustrates the internal structure and functions of the HSS 2 and the S-CSCF 1. The HSS 2 comprises a security unit 31 that maintains security related parameters for users, e.g. private identities, passwords, other security credentials. A server assignment unit 32 maintains the information on currently assigned S-CSCFs 1 for a user. In the server assignment unit 32, S-CSCFs are preferably assigned to users according to standard S-CSCF assignment mechanism described earlier in the application. The HSS 2 has a password handling unit 33 that may obtain new passwords from a password creation unit 35 located in the HSS 2 or from external sources, e.g. from UE or the user. The password handling unit 33 may replace the current password stored for the user in the security unit 31 with the new password it has obtained. The replacement may happen immediately after obtaining the new password or only later, e.g. after the new password has been successfully delivered to the S-CSCF 1 and/or the UE 3. A transmitting unit 34 is transmitting Diameter messages to the IMS network, e.g. to S-CSCFs. The transmitting unit 34 may receive a new password for a user, together with identity of the user, from the security unit 31 or from the password handling unit 33 and transmit the new password to the correct S-CSCF 1. The transmitting unit 34 may get a name or address of the correct S-CSCF 1 from the server assignment unit 32 based on the identity of the user. The password creation unit 35 is generating new passwords for users, e.g. based on operator's security policy. New passwords may be created, for example, in certain intervals. The password creation unit 35 may submit a new password to the password handling unit 34, and/or to a password delivery unit 37 which is configured to initiate a delivery of the new password to the UE, e.g. by contacting an external web portal or operator's device management (DM) server which in turn may take care of the delivery to the UE using over-the-air (OTA) interface. Finally, the HSS 2 may comprise a confirmation unit 36 which is sending a confirmation to the user if the new password originates from the user. The password handling unit 33, after obtaining a new password from a user, may order the confirmation unit 36 to initiate the confirmation sending.

In figure 3, the S-CSCF 1 comprises a receiving unit 41 that is receiving Diameter messages e.g. from the HSS 2. The receiving unit 41 is able to receive a new password for a user in the received messages. A storing unit 43 is storing received passwords for users and it may replace the current stored password with a new password it obtains from the receiving unit 41. Alternatively storing unit 43 may store both the old and new password together for a while, e.g. until a removal unit 44 orders to remove the old password. The removal unit 44 may order the removal of the old password after a certain period of time, e.g. after the password change process for the user is expected to be completed in the whole IMS network, including the UE. An authentication unit 42 is authenticating communication from a user using the password of the user it obtains from the storing unit 43 or from the receiving unit 41. If both old and new passwords are available, the authentication unit 42 may first try the new password, and then the old password if the authentication is not successful with the new password. However, if the authentication is successful with the new password the authentication unit 42 and/or the removal unit 44 may initiate the removal of the old password in the storing unit 43. All units described above may be implemented, for example, using microprocessors or other electronic components in combination with software.

Pushing a password from the HSS to the S-CSCF has certain advantages over other possible attempts to solve the problem. For example, one could try to re-use the existing network initiated re-authentication procedure, where the S-CSCF may download a password during the registration period, here called "Pull-mechanism". The present "Push-mechanism" provides more consistence in the password change since the S-CSCF cannot know when the password stored in the HSS is updated. As a consequence the passwords in the S-CSCF and the HSS may be different before the S-CSCF has downloaded the new password from the HSS; however the password in the UE may already been updated. Having different passwords in the UE and in the S-CSCF may cause authentication errors and preclude communication of this user.

Such "Pull-mechanism" would also create unnecessary messages and load in Cx interface as the S-CSCF has to periodically download the password from the HSS. This could lead to performance impact, especially when the S-CSCF has to authenticate both REGISTER and non-REGISTER request. To ensure that the updated password is used, the S-CSCF would have to download the password every time when a message shall be authenticated. This could cause large performance overhead.

With this invention, the password stored in the HSS and the S-CSCF for authentication can be kept consistent as soon as the password is updated in the HSS and no performance overhead will be caused for the network.

It is to be understood that UE is the physical device transmitting the communication to the network. Sometimes the UE is commanded by the user of the UE to transmit; sometimes the UE is acting without direct command from the user, e.g. registering to the network automatically after being out of coverage or when roaming. In the description, terms UE and user are sometimes meant to cover, both, the user or the subscriber as well as the UE (physical device).

Functions of the register entity (HSS), the serving entity (S-CSCF) and the user equipment (UE) described above may be implemented by code means, as software, and loaded into memory of a computer.

## Claims

1. A home subscriber server, HSS, (2) in an internet protocol IP multimedia subsystem IMS (5), comprising
- security means (31) for storing an identity of a user and maintaining a password associated with the user,
- server assignment means (32) for storing information about a serving call state control function, S-CSCF, (1) assigned to serve the user,
- password handling means (33) for obtaining a new password associated with the user and replacing the password maintained in the security means (31) with the new password,
- transmitting means (34) for transmitting the new password to the serving call state control function, S-CSCF, (1) assigned to serve the user, together with the identity of the user, responsive to the obtaining the new password, wherein the transmitting means (34) is configured to transmit the new password as part of a user profile update request.

2. A home subscriber server, HSS, (2) according to claim 1, wherein the transmitting means (34) is configured to transmit the new password in a message according to Diameter protocol.

3. A home subscriber server, HSS, (2) according to claim 1 or 2, wherein the transmitting means (34) is configured to transmit the new password in a Push-Profile-Request command of Diameter protocol.

4. A home subscriber server, HSS, (2) according to any of claims 1 to 3, wherein the transmitting means is configured to transmit the new password over Cx interface.

5. A home subscriber server, HSS, (2) according to any of claims 1 to 4, wherein the password handling means is configured to obtain the new password from the user.

6. A home subscriber server, HSS, (2) according to any of claims 1 to 4, further comprising password creation means (35) for creating passwords for the user and wherein the password handling means (33) is configured to obtain the new password from the password creation means (35).

7. A home subscriber server, HSS, (2) according to claim 6, further comprising password delivery means (37) for initiating a delivery of the new password, created by the password creation means (35), to the user.

8. A home subscriber server, HSS, (2) according to any of claims 1 to 5, further comprising confirmation means (36) for initiating a transmittal of a confirmation of the new password to the user.

9. A home subscriber server, HSS, (2) according to any of preceding claims, wherein the transmitting means (34) is configured to transmit, after obtaining the new password, the password originally maintained in the security means (31) to a second S-CSCF which is requesting a user profile of the user.

10. A home subscriber server, HSS, (2) according to claim 9 wherein the transmitting means (34) is configured to transmit the password originally maintained in the security means (31) when the user is making a further registration to the network before the user has acknowledged the new password.

11. A communication system comprising the home subscriber server, HSS, (2) according to any of claims 1-10 and a serving call state control function, S-CSCF, (1), the serving call state control function, S-CSCF, (1) comprising receiving means (41) for receiving the password transmitted by the transmitting means (34), and authentication means (42) for authenticating communication from the user using the password.

12. A communication system according to claim 11, wherein the serving call state control function, S-CSCF, (1) further comprises storing means (43) for storing, for a period of time, both the new password for the user and a previous password for the user.

13. A communication system according to claim 12, wherein the serving call state control function, S-CSCF, (1) further comprises removal means (44) for removing the previous password from the storing means (43) after a residual lifetime.

14. A communication system according to claim 12 or 13, wherein the authentication means (42) is configured to authenticate the communication primarily using the new password, and secondarily using the previous password if the authentication with the new password is not successful.

15. A communication system according to claim 14, wherein the removal means (44) is configured to remove the previous password from the storing means (43) responsive to a successful authentication with the new password by the authentication means (42).

16. A method for updating a password in an internet protocol IP multimedia subsystem IMS, comprising the:
- storing (21) at a home subscriber server, HSS, (2) an identity of a user and a password associated with the user,
- maintaining (21) at the home subscriber server, HSS, (2) information about a serving call state control function, S-CSCF, (1) assigned to serve the user,
- obtaining, at the home subscriber server, HSS, (2), a (21) new password associated with the user,
- replacing (21), at the home subscriber server, HSS, (2), the stored password with the new password, and
- transmitting (22) the new password from the home subscriber server, HSS, (2) to the serving call state control function, (1) assigned to serve the user, together with the identity of the user, responsive to the obtaining the new password, wherein the transmitting (22) comprises transmitting the new password as part of a user profile update request.

17. A method according to claim 16, wherein the transmitting (22) comprises transmitting the new password in a message according to Diameter protocol.

18. A method according to claim 16-17, wherein the transmitting (22) comprises transmitting the new password in a Push-Profile-Request command of Diameter protocol.

19. A method according to any of claims 16-18, wherein the obtaining (22) the new password comprises obtaining the new password from the user.

20. A method according to any of claims 16-19, further comprising creating, at the home subscriber server, HSS, (2), the password for the user.

21. A method according to claim 20 further comprising initiating a delivery of the created new password to the user.

22. A method according to any of claims 16-21, further comprising authenticating, at the serving call state control function, (1), communication from the user using the password.

23. A computer program product comprising code means adapted to produce the steps of any one of claims 16-22 when loaded into the memory of a computer.

## Patentansprüche

1. Heimteilnehmer-Server HSS (2) in einem Internet-Protokoll-(IP-)Multimedienteilsystem IMS (5), umfassend
- Sicherheitsmittel (31) zum Speichern einer Identität eines Benutzers und Bewahren eines dem Benutzer zugeordneten Passworts,
- Server-Zuweisungsmittel (32) zum Speichern von Informationen über eine zum Bedienen des Benutzers zugewiesene bedienende Verbindungszustandssteuerfunktion S-CSCF (1),
- Passwortbearbeitungsmittel (33) zum Erhalten eines dem Benutzer zugeordneten neuen Passworts und Ersetzen des in den Sicherheitsmitteln (31) bewahrten Passworts durch das neue Passwort,
- Übertragungsmittel (34) zum Übertragen des neuen Passworts zu der zum Bedienen des Benutzers zugewiesenen bedienenden Verbindungszustandssteuerfunktion S-CSCF (1), zusammen mit der Identität des Benutzers als Reaktion auf das Erhalten des neuen Passworts, wobei die Übertragungsmittel (34) zum Übertragen des neuen Passworts als Teil einer Benutzerprofilaktualisierungsanforderung eingerichtet sind.

2. Heimteilnehmer-Server HSS (2) nach Anspruch 1, wobei die Übertragungsmittel (34) zum Übertragen des neuen Passworts in einer Nachricht gemäß dem Diameter-Protokoll eingerichtet sind.

3. Heimteilnehmer-Server HSS (2) nach Anspruch 1 oder 2, wobei die Übertragungsmittel (34) zum Übertragen des neuen Passworts in einem Push-Profile-Request-Befehl des Diameter-Protokolls eingerichtet sind.

4. Heimteilnehmer-Server HSS (2) nach einem beliebigen der Ansprüche 1 bis 3, wobei die Übertragungsmittel zum Übertragen des neuen Passworts über Cx-Schnittstelle eingerichtet sind.

5. Heimteilnehmer-Server HSS (2) nach einem beliebigen der Ansprüche 1 bis 4, wobei die Passwortbearbeitungsmittel zum Erhalten des neuen Passworts vom Benutzer eingerichtet sind.

6. Heimteilnehmer-Server HSS (2) nach einem beliebigen der Ansprüche 1 bis 4, weiterhin umfassend Passworterstellungsmittel (35) zum Erstellen von Passwörtern für den Benutzer und wobei die Passwortbearbeitungsmittel (33) zum Erhalten des neuen Passworts von den Passworterstellungsmitteln (35) eingerichtet sind.

7. Heimteilnehmer-Server HSS (2) nach Anspruch 6, weiterhin umfassend Passwortzustellungsmittel (37) zum Einleiten einer Zustellung des durch die Passworterstellungsmittel (35) erstellten neuen Passworts zum Benutzer.

8. Heimteilnehmer-Server HSS (2) nach einem beliebigen der Ansprüche 1 bis 5, weiterhin umfassend Bestätigungsmittel (36) zum Einleiten einer Übertragung einer Bestätigung des neuen Passworts zum Benutzer.

9. Heimteilnehmer-Server HSS (2) nach einem beliebigen der vorhergehenden Ansprüche, wobei die Übertragungsmittel (34) zum Übertragen nach Erhalten des neuen Passworts des ursprünglich in den Sicherheitsmitteln (31) bewahrten Passworts zu einer zweiten S-CSCF eingerichtet sind, die ein Benutzerprofil des Benutzers anfordert.

10. Heimteilnehmer-Server HSS (2) nach Anspruch 9, wobei die Übertragungsmittel (34) zum Übertragen des ursprünglich in den Sicherheitsmitteln (31) bewahrten Passworts eingerichtet sind, wenn der Benutzer eine weitere Registrierung im Netz durchführt, ehe der Benutzer das neue Passwort bestätigt hat.

11. Kommunikationssystem, umfassend den Heimteilnehmer-Server HSS (2) nach einem beliebigen der Ansprüche 1-10 und eine bedienende Verbindungszustandssteuerfunktion S-CSCF (1), wobei die bedienende Verbindungszustandssteuerfunktion S-CSCF (1) Empfangsmittel (41) zum Empfangen des durch die Übertragungsmittel (34) zu übertragenden Passworts umfasst, und Authentifizierungsmittel (42) zum Authentifizieren der Kommunikation vom Benutzer unter Verwendung des Passworts.

12. Kommunikationssystem nach Anspruch 11, wobei die bedienende Verbindungszustandssteuerfunktion S-CSCF (1) weiterhin Speichermittel (43) zum Speichern für eine Zeitdauer sowohl des neuen Passworts für den Benutzer als auch eines vorhergehenden Passworts für den Benutzer umfasst.

13. Kommunikationssystem nach Anspruch 12, wobei die bedienende Verbindungszustandssteuerfunktion S-CSCF (1) weiterhin Entfernungsmittel (44) zum Entfernen des vorhergehenden Passworts aus den Speichermitteln (43) nach einer Restlebensdauer umfasst.

14. Kommunikationssystem nach Anspruch 12 oder 13, wobei die Authentifizierungsmittel (42) zum Authentifizieren der Kommunikation hauptsächlich unter Verwendung des neuen Passworts und zweitens unter Verwendung des vorhergehenden Passworts, wenn die Authentifizierung mit dem neuen Passwort nicht erfolgreich ist, eingerichtet sind.

15. Kommunikationssystem nach Anspruch 14, wobei die Entfernungsmittel (44) zum Entfernen des vorhergehenden Passworts aus dem Speichermittel (43) als Reaktion auf eine erfolgreiche Authentifizierung mit dem neuen Passwort durch das Authentifizierungsmittel (42) eingerichtet sind.

16. Verfahren zum Aktualisieren einer Passworts in einem Internet-Protokoll-(IP-)Multimedienteilsystem IMS, umfassend das:
- Speichern (21) in einem Heimteilnehmer-Server HSS (2) einer Identität eines Benutzers und eines dem Benutzer zugeordneten Passworts,
- Bewahren (21) im Heimteilnehmer-Server HSS (2) von Informationen über eine zum Bedienen des Benutzers zugewiesene bedienende Verbindungszustandssteuerfunktion S-CSCF (1),
- Erhalten am Heimteilnehmer-Server HSS (2) eines (21) dem Benutzer zugeordneten neuen Passworts,
- Ersetzen (21) am Heimteilnehmer-Server HSS (2) des gespeicherten Passworts durch das neue Passwort, und
- Übertragen (22) des neuen Passworts vom Heimteilnehmer-Server HSS (2) zu der zum Bedienen des Benutzers zugewiesenen bedienenden Verbindungszustandssteuerfunktion (1), zusammen mit der Identität des Benutzers als Reaktion auf das Erhalten des neuen Passworts, wobei das Übertragen (22) Übertragen des neuen Passworts als Teil einer Benutzerprofilaktualisierungsanforderung umfasst.

17. Verfahren nach Anspruch 16, wobei das Übertragen (22) Übertragen des neuen Passworts in einer Nachricht gemäß dem Diameter-Protokoll umfasst.

18. Verfahren nach Anspruch 16-17, wobei das Übertragen (22) Übertragen des neuen Passworts in einem Push-Profile-Request-Befehl des Diameter-Protokolls umfasst.

19. Verfahren nach einem beliebigen der Ansprüche 16-18, wobei das Erhalten (22) des neuen Passworts Erhalten des neuen Passworts vom Benutzer umfasst.

20. Verfahren nach einem beliebigen der Ansprüche 16-19, weiterhin umfassend Erstellen am Heimteilnehmer-Server HSS (2) des Passworts für den Benutzer.

21. Verfahren nach Anspruch 20, weiterhin umfassend Einleiten einer Zustellung des erstellten neuen Passworts zu dem Benutzer.

22. Verfahren nach einem beliebigen der Ansprüche 16-21, weiterhin umfassend Authentifizieren an der bedienenden Verbindungszustandssteuerfunktion (1) der Kommunikation vom Benutzer unter Verwendung des Passworts.

23. Computer-Programmprodukt, umfassend Codemittel, die zum Erzeugen der Schritte eines beliebigen der Ansprüche 16-22 eingerichtet sind, wenn es in den Speicher eines Computers eingeladen ist.

## Revendications

1. Un serveur d'abonné résidentiel, HSS, (2) dans un sous-système multimédia, IMS, de protocole Internet, IP, (5), comprenant
- un moyen de sécurité (31) destiné à placer en mémoire une identité d'un utilisateur et à conserver un mot de passe associé à l'utilisateur,
- un moyen d'attribution de serveur (32) destiné à placer en mémoire des informations relatives à une fonction de commande d'état d'appel de desserte, S-CSCF, (1) attribuée de façon à desservir l'utilisateur,
- un moyen de gestion de mot de passe (33) destiné à obtenir un nouveau mot de passe associé à l'utilisateur et à remplacer le mot de passe conservé dans le moyen de sécurité (31) par le nouveau mot de passe,
- un moyen de transmission (34) destiné à transmettre le nouveau mot de passe à la fonction de commande d'état d'appel de desserte, S-CSCF, (1) attribuée de façon à desservir l'utilisateur, conjointement avec l'identité de l'utilisateur, en réaction à l'obtention du nouveau mot de passe, dans lequel le moyen de transmission (34) est configuré de façon à transmettre le nouveau mot de passe dans le cadre d'une demande de mise à jour de profil d'utilisateur.

2. Un serveur d'abonné résidentiel, HSS, (2) selon la revendication 1, dans lequel le moyen de transmission (34) est configuré de façon à transmettre le nouveau mot de passe dans un message selon le protocole Diameter.

3. Un serveur d'abonné résidentiel, HSS, (2) selon la revendication 1 ou 2, dans lequel le moyen de transmission (34) est configuré de façon à transmettre le nouveau mot de passe dans une commande "Push-Profile-Request" " du protocole Diameter.

4. Un serveur d'abonné résidentiel, HSS, (2) selon l'une quelconque des revendications 1 à 3, dans lequel le moyen de transmission est configuré de façon à transmettre le nouveau mot de passe par l'intermédiaire d'une interface Cx.

5. Un serveur d'abonné résidentiel, HSS, (2) selon l'une quelconque des revendications 1 à 4, dans lequel le moyen de gestion de mot de passe est configuré de façon à obtenir le nouveau mot de passe auprès de l'utilisateur.

6. Un serveur d'abonné résidentiel, HSS, (2) selon l'une quelconque des revendications 1 à 4, comprenant en outre un moyen de création de mot de passe (35) destiné à créer des mots de passe pour l'utilisateur et dans lequel le moyen de gestion de mot de passe (33) est configuré de façon à obtenir le nouveau mot de passe auprès du moyen de création de mot de passe (35).

7. Un serveur d'abonné résidentiel, HSS, (2) selon la revendication 6, comprenant en outre un moyen de remise de mot de passe (37) destiné à lancer une remise du nouveau mot de passe, créé par le moyen de création de mot de passe (35), à l'utilisateur.

8. Un serveur d'abonné résidentiel, HSS, (2) selon l'une quelconque des revendications 1 à 5, comprenant en outre un moyen de confirmation (36) destiné à lancer un transfert d'une confirmation du nouveau mot de passe à l'utilisateur.

9. Un serveur d'abonné résidentiel, HSS, (2) selon l'une quelconque des revendications précédentes, dans lequel le moyen de transmission (34) est configuré de façon à transmettre, après obtention du nouveau mot de passe, le mot de passe conservé à l'origine dans le moyen de sécurité (31) vers une deuxième fonction S-CSCF qui demande un profil d'utilisateur de l'utilisateur.

10. Un serveur d'abonné résidentiel, HSS, (2) selon la revendication 9, dans lequel le moyen de transmission (34) est configuré de façon à transmettre le mot de passe conservé à l'origine dans le moyen de sécurité (31) lorsque l'utilisateur effectue un nouvel enregistrement sur le réseau avant qu'il n'ait accusé réception du nouveau mot de passe.

11. Un système de communication comprenant le serveur d'abonné résidentiel, HSS, (2) selon l'une quelconque des revendications 1 à 10 et une fonction de commande d'état d'appel de desserte, S-CSCF, (1), la fonction de commande d'état d'appel de desserte, S-CSCF, (1) comprenant un moyen de réception (41) destiné à recevoir le mot de passe transmis par le moyen de transmission (34), et un moyen d'authentification (42) destiné à authentifier une communication provenant de l'utilisateur au moyen du mot de passe.

12. Un système de communication selon la revendication 11, dans lequel la fonction de commande d'état d'appel de desserte, S-CSCF, (1) comprend en outre un moyen de mise en mémoire (43) destiné à placer en mémoire, pendant une période de temps, à la fois le nouveau mot de passe pour l'utilisateur et un mot de passe antérieur pour l'utilisateur.

13. Un système de communication selon la revendication 12, dans lequel la fonction de commande d'état d'appel de desserte, S-CSCF, (1) comprend en outre un moyen de suppression (44) destiné à supprimer le mot de passe antérieur du moyen de mise en mémoire (43) après une durée de vie résiduelle.

14. Un système de communication selon la revendication 12 ou 13, dans lequel le moyen d'authentification (42) est configuré de façon à authentifier la communication principalement au moyen du nouveau mot de passe, et secondairement au moyen du mot de passe antérieur si l'authentification par le nouveau mot de passe échoue.

15. Un système de communication selon la revendication 14, dans lequel le moyen de suppression (44) est configuré de façon à supprimer le mot de passe antérieur du moyen de mise en mémoire (43) en réaction à une authentification réussie avec le nouveau mot de passe par le moyen d'authentification (42).

16. Un procédé de mise à jour d'un mot de passe dans un sous-système multimédia, IMS, de protocole Internet, IP, comprenant :
- la mise en mémoire (21) sur un serveur d'abonné résidentiel, HSS, (2) d'une identité d'un utilisateur et d'un mot de passe associé à l'utilisateur,
- la conservation (21) sur le serveur d'abonné résidentiel, HSS, (2) d'informations relatives à une fonction de commande d'état d'appel de desserte, S-CSCF, (1) attribuée de façon à desservir l'utilisateur,
- l'obtention, sur le serveur d'abonné résidentiel, HSS, (2), d'un (21) nouveau mot de passe associé à l'utilisateur,
- le remplacement (21), sur le serveur d'abonné résidentiel, HSS, (2), du mot de passe mis en mémoire par le nouveau mot de passe, et
- la transmission (22) du nouveau mot de passe à partir du serveur d'abonné résidentiel, HSS, (2) vers la fonction de commande d'état d'appel de desserte, (1) attribuée de façon à desservir l'utilisateur, conjointement avec l'identité de l'utilisateur, en réaction à l'obtention du nouveau mot de passe, dans lequel la transmission (22) comprend la transmission du nouveau mot de passe dans le cadre d'une demande de mise à jour de profil d'utilisateur.

17. Un procédé selon la revendication 16, dans lequel la transmission (22) comprend la transmission du nouveau mot de passe dans un message selon le protocole Diameter.

18. Un procédé selon les revendications 16-17, dans lequel la transmission (22) comprend la transmission du nouveau mot de passe dans une commande "Push-Profile-Request" du protocole Diameter.

19. Un procédé selon l'une quelconque des revendications 16 à 18, dans lequel l'obtention (22) du nouveau mot de passe comprend l'obtention du nouveau mot de passe auprès de l'utilisateur.

20. Un procédé selon l'une quelconque des revendications 16 à 19, comprenant en outre la création, sur le serveur d'abonné résidentiel, HSS, (2), du mot de passe pour l'utilisateur.

21. Un procédé selon la revendication 20 comprenant en outre le lancement d'une remise du nouveau mot de passe créé à l'utilisateur.

22. Un procédé selon l'une quelconque des revendications 16 à 21, comprenant en outre l'authentification, sur la fonction de commande d'état d'appel de desserte, (1), d'une communication provenant de l'utilisateur au moyen du mot de passe.

23. Un programme informatique contenant du code adapté de façon à produire les opérations selon l'une quelconque des revendications 16 à 22 lorsqu'il est chargé dans la mémoire d'un ordinateur.
